# EUROPEAN PATENT APPLICATION

(11) **EP 2 937 932 A2**
(43) Date of publication of application: **28.10.2015**
(21) Application number: 15160889.0
(22) Date of filing: 25.03.2015
(51) Int. Cl.: H01M 10/617

(54) **INSULATING LIQUID IMMERSED BATTERY**

(30) Priority: 02.04.2014 US 201414243222
(71) Applicant: Hamilton Sundstrand Corporation, Charlotte, NC 28217 (US)
(72) Inventor: White, Adam Michael, Belvidere, IL Illinois 61008 (US); Campbell, Kris Harold, Poplar Grove, IL Illinois 61065 (US); Shepard, Charles, DeKalb, IL Illinois 60115 (US)
(74) Representative: Leckey, David Herbert

(57) **Abstract**

A multi-cell battery pack (100) may be designed to serve as a thermosiphon. Stated another way, multi-cell battery pack (100) may be designed to incorporate a passive heat exchange technique based on natural convection, which circulates a substance (liquid, or gas such as air) without the necessity of a mechanical pump. In this way, insulating fluid (130) in cavities between cells (115;215-218) greatly enhances the likelihood of preventing a thermal runaway condition. The insulating fluid (130) in cavities between cells (115;215-218) may result in reduced arcing and the elimination of combustion within a battery housing.

## Description

### FIELD

The present disclosure relates to thermal transfer systems, and more particularly, to cooling and fire prevention in battery packs.

### BACKGROUND

Multi-cell packs of batteries are typically used for a means of chemical energy storage for use in electric power systems. Individual battery cells are connected electrically in series and/or parallel in order to meet the voltage and energy storage requirements for a given application. The individual cells may use lead acid, Nickel Metal Hydride, Nickel Cadmium, Lithium Ion, Lithium Polymer or other chemistries depending upon cost, reliability, volume, weight and other system constraints.

Multi-cell battery packs generally consist of individual cells interconnected and packaged into a single enclosure along with monitoring and/or charging circuitry. The space between battery cells may be filled with air. Failure of a single cell due to improper charging, improper discharging, high thermal stress, manufacturing defects or other causes may cause arcing and electrical fires. The fire often spreads to other battery cells, increasing the available fire energy and potential equipment damage substantially.

### SUMMARY

The present disclosure relates to a thermosiphon battery pack. For instance, A multi-cell battery pack having a pressure vessel housing a plurality of battery cells and having an internal volume, an insulating fluid configured to substantially fill a void between at least two battery cells in the plurality of battery cells; and a condenser disposed in the internal volume of the pressure vessel is disclosed herein.

According to various embodiments, a method of removing localized heat and distributing the localized heat over a large surface area of the multi-cell battery pack is disclosed. The method may comprise in response to localized thermal increase of a cell within a liquid tight pressure vessel of a multi-cell battery pack expanding insulating fluid in thermal contact with the cell of the multi-cell battery pack in response to the localized thermal increase of the cell. The insulating fluid may become less dense and increase in buoyancy as it is heated. The method may comprise passively moving the heated expanded insulating fluid away from the cell within multi-cell battery pack towards a condenser internal to the battery pack, by way of convection. The method may comprise passively replacing the heated expanded insulating fluid with relatively cooler second volume of insulating fluid in thermal contact with the cell of the multi-cell battery pack via gravity. The method may comprise dissipating heat as heated expanded insulating fluid transforms from vapor to liquid state.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 is a representative multi-cell battery comprising insulating liquid in accordance with various embodiments;
FIG. 2 is a representative side view of a multi-cell battery comprising insulating liquid in accordance with various embodiments; and
FIG. 3 is a process flow of the multi-cell battery described herein in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosure, it should be understood that other embodiments may be realized and that logical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step.

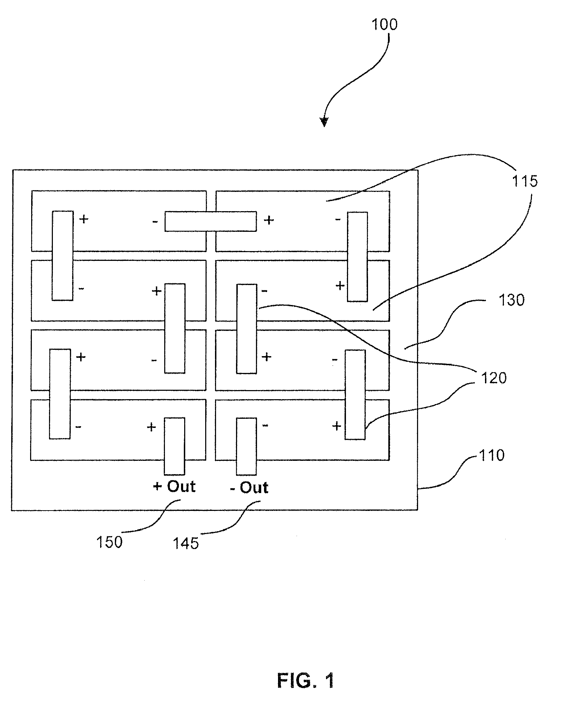

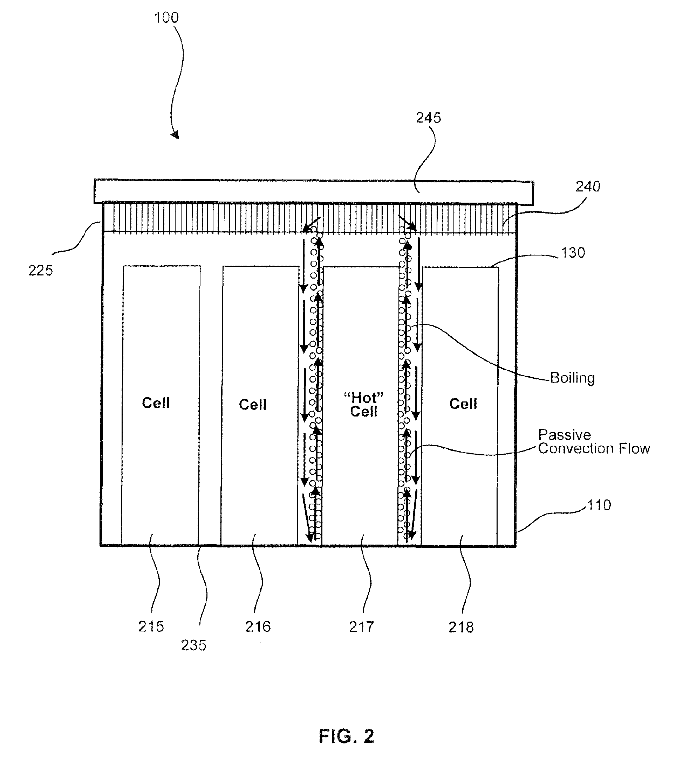

According to various embodiments and with reference to FIGs. 1 and 2, a multi-cell battery pack 100 is encased in a liquid tight pressure vessel 110. The liquid tight pressure vessel 110 may be made from any compatible materials. The liquid tight pressure vessel 110 may define an internal cavity configured to house elements, such as one or more cells of a battery. An electric battery, such as a device comprising of one or more electrochemical cells configured to convert stored chemical energy into electrical energy. Each cell may comprise a positive terminal 150 and a negative terminal 145. Electrolytes allow ions to move between the positive terminal 150 and a negative terminal 145, which allows current to flow from the battery to perform work. The methods and applications described herein may be practiced with any type of electrical energy storage cell, such as a primary battery, secondary battery, uninterruptable power supply, capacitor and/or the like. Cells 115 may be coupled together through any desired means, such as via bus bars 120. The pressure vessel 110 may be filled with any insulating fluid 130 selected based on a desired temperatures and pressures expected to be experienced by the battery pack 100. For example, the insulating fluid 130 may be a fluorocarbon fluid such as FC-72 FLUORINERT™ and/or perfluorohexane (C₆F₁₄) or tetradecafluorohexane. Perfluorohexane has a low boiling point of 56°C (132.8 degrees Fahrenheit) and freezing point of -90 °C (-130 degrees Fahrenheit). It is odorless and colorless. The insulating fluid 130 may be in thermal contact with components of the battery and/or multi-cell battery, such as the cells 115 of the battery and/or multi-cell battery. For instance, insulating fluid 130 may be located in the cavities between the cells to substantially fill the pressure vessel 110. According to various embodiments, the insulating fluid comprises a boiling point between about -80°F (about -62.22 degrees Celsius) and about 2700°F (about 1482 degrees Celsius).

With reference to FIGs. 1 and 2, a portion of the pressure vessel 110, such as at the top 225 of the pressure vessel 110 may comprise a relatively small volume of air/vapor. The lid 245 and workings of the multi-cell battery pack 100 are designed to serve as a thermosiphon (also known as a thermosyphon). Stated another way, multi-cell battery pack 100 is designed to incorporate a passive heat exchange technique based on natural convection, which circulates a substance (liquid, or gas such as air) without the necessity of a mechanical pump.

The insulating fluid 130 in the cavities between cells greatly enhances the thermal mass of the battery. The additional thermal mass increases the amount of time before the temperature of battery pack 100 reaches dangerous levels during the failure of cell 217 of FIG. 2, increasing the likelihood of preventing a thermal runaway condition. A thermal runaway may refers to a situation where an increase in temperature changes conditions in a way that causes a further increase in temperature, often leading to a destructive result. For example, a thermal runaway may result in a fire.

In response to a battery pack 100 being heated due to normal operation or due to a component or device failure, resultant heat from the heat source is transferred to the insulating fluid 130. In response to the heat generated exceeding a threshold, such as a threshold determined by the insulating fluid 130 type and the internal temperature and pressure of the pressure vessel 110, localized boiling of the insulating fluid 130 will occur and the insulating fluid 130 will exist in a saturated liquid and gas mixture. Lid 245 may comprise a condenser. The condenser 240 may take any desired form, such as a cavity having a plurality of spaced fins.

Natural convection will drive the insulating fluid 130 flow to the condenser 240 from the heat source, such as "hot cell" cell 217 as compared to cells 215, 216, 218, and back to the hot cell 217. In this way, convective movement of the insulating fluid 130 begins in response to insulating fluid 130 in the pressure vessel 110 being heated, such as by a relatively hot cell 217, causing insulating fluid 130 to expand and become less dense and thus more buoyant than the cooler insulating fluid 130 in other areas of the pressure vessel 110, such as near the bottom 235 of the pressure vessel 110. Convection moves heated, expanded insulating fluid 130 upwards in the immediate proximity of battery pack 100 as it is simultaneously replaced by cooler insulating fluid 130 returning by gravity. The insulating fluid 130 vapor dissipates heat as it transforms from vapor to liquid state and cools. In this way, localized heat of a cell 217 is spread via the insulating fluid 130 and the condenser 240 across a larger surface area, lowering the heat experienced at any one location. Ideally, the insulating fluid 130 flows easily due to very little hydraulic resistance. In this way, localized heat is removed and distributed over a larger volume of the battery pack 100. Heat transfer from the battery cells 215, 216, 217, 218 to the insulating fluid 130 is enhanced by the multiphase nature of the insulating fluid 130.

Moreover, as compared to conventional battery packs, the insulating fluid 130 displaces the air/combustible gas that would ordinarily be located in larger volumes between the cells of the battery, and thus combustion is unlikely due to depriving the system of oxygen. Additionally, insulating fluid 130 reduces the overall number of hot spots in the battery pack 100 and using its heat spreading capability.

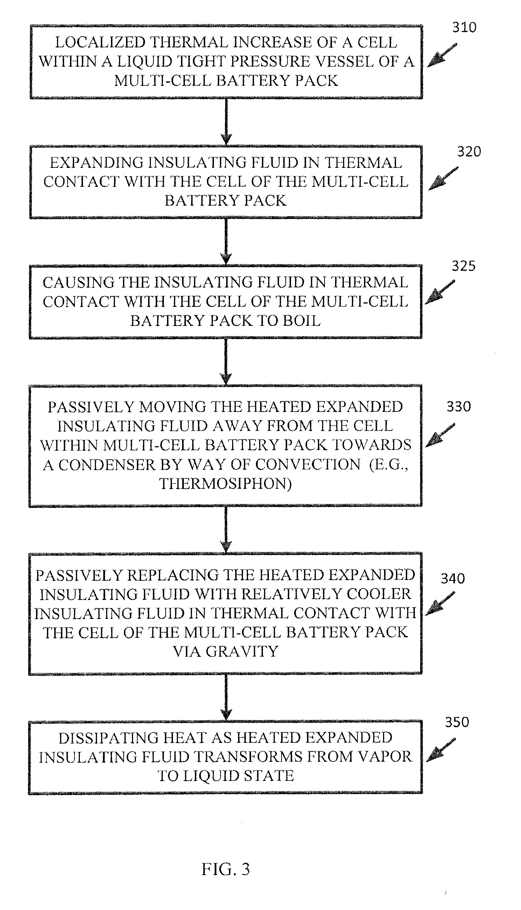

According to various embodiments and with reference to FIG. 3 a method for removing localized heat and distributing the localized heat over a large surface area of the multi-cell battery pack is described. Localized thermal increase of a cell within a liquid tight pressure vessel of a multi-cell battery pack may be experienced. (Step 310) In response to the localized heat, insulating fluid in thermal contact with the cell of the multi-cell battery pack may expand. (Step 320). The insulating fluid in thermal contact with the cell of the multi-cell battery pack may boil and convert from a liquid to a vapor. (Step 325). The heated expanded insulating fluid may be passively moved away from the cell within multi-cell battery pack towards a condenser by way of convection (e.g., thermosiphon) (Step 330). The heated expanded insulating fluid may be passively replaced with relatively cooler insulating fluid in thermal contact with the cell of the multi-cell battery pack via gravity (Step 340). As heated expanded insulating fluid transforms from vapor to liquid state heat is dissipated. (Step 350).

With reference back to FIG. 2, according to various embodiments, one or more localized heat sources, such as by a relatively hot cell 217, may introduce a thermal gradient which may cause the insulating fluid 130 to flow. With modest heat fluxes, the insulating fluid 130 will flow as a single phase liquid, carrying heat away from components that are dissipating heat. Thus, as flow is introduced between differing temperatures to affect equalization, and overall insulating fluid 130 flow path is created between cells, such as between cells 216 and 217 and between cells 217 and 218, and/or between the cells and the interior walls of the pressure vessel 110. The subsequently condensed insulating fluid 130 transfers heat within the battery pack 100, which may then dissipate the heat to an external environment, such as through the wall of pressure vessel 110. At higher heat fluxes, boiling or evaporation will occur on the heat dissipation surfaces with the latent heat of phase change providing the cooling effect. The vapor that is generated, normally in bubbles is carried by fluid convection and buoyancy to the condenser 240 where the heat of vaporization is removed and the insulating fluid 130 returns to a liquid state. Under some conditions of operation, boiling may occur with the generated bubbles being condensed in a circulating and sub-cooled liquid. It shall be understood that the term "insulating fluid" herein shall refer to a material that is generally a liquid, having a low boiling point which is generally electrically nonconductive.

A cell sensor may monitor the performance of the battery pack 100. A normal high thermal event may be monitored by the sensor to determine that replacement of the cell and/or battery cell is warranted. The design of battery pack 100 may reduce the likelihood of a catastrophic failure within the battery pack 100. The design of battery pack 100 may prevent and/or reduce the likelihood of battery damage by preventing the initiation of electrical arcing due to the arc suppressing properties of the insulating fluid 130. The design of battery pack 100 may prevent and/or reduce the likelihood of battery damage resulting from the failure of a single battery cell cascading to additional cells by improved removal of heat from the failed cell.

According to various embodiments, a volume of insulating fluid 130 may be added to the pressure vessel 110 of a nearly complete battery pack 100. This volume of insulating fluid 130 may be a known volume based on the volume of the pressure vessel 110. According to various embodiments, a pressure release valve may be coupled to battery pack 100, such as coupled to the lid 245 of battery pack 100. Pressure relief value may comprise a known threshold such that as the pressure reaches the threshold in response to adding insulating fluid 130 to the pressure vessel 110 at a known temperature, the pressure relief value automatically degases the non-condensable materials in the battery pack 100 system and regulates that pressure to the desired/threshold value. The volume of insulating fluid 130 within pressure vessel 110 may then be fixed at a constant amount with no additional venting. The level of the insulating fluid 130 in pressure vessel 110 as a liquid may be at its highest point when the battery pack 100 is cool. As the pressure increases, such as a due to heating within the battery pack 100, the volume of insulating fluid 130 liquid may decrease as insulating fluid 130 becomes vapor. The mass of insulating fluid 130 within pressure vessel 110 is constant.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

According to various embodiments, while a multi-cell battery pack is described herein it should be appreciated that a single cell battery pack and/or a battery pack having multiple distinct chambers is similarly contemplated herein. For example an insulating fluid may configured to substantially fill a void between a battery cell and a pressure vessel housing.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments. Different cross-hatching is used throughout the figures to denote different parts but not necessarily to denote the same or different materials.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A multi-cell battery pack (100) comprising:
a pressure vessel housing (110) a plurality of battery cells (115;125-218) and having an internal volume;
an insulating fluid (130) configured to substantially fill a void between at least two battery cells (115;215-218) in the plurality of battery cells (115;215-218); and
a condenser (240) disposed in the internal volume of the pressure vessel (110).

2. The multi-cell battery pack of claim 1, wherein the pressure vessel (110), the insulating fluid (130) and the condenser (240) combine to form a thermosiphon.

3. The multi-cell battery pack of claim 1 or 2, wherein the pressure vessel (110) is a liquid tight pressure vessel.

4. The multi-cell battery pack of claim 1, 2 or 3, wherein the insulating fluid (130) is configured to deprive the multi-cell battery pack (115;215-218) of oxygen for combustion.

5. The multi-cell battery pack of any preceding claim, wherein the insulating fluid (130) is configured to reduce a likelihood of electrical arcing.

6. The multi-cell battery pack of any preceding claim, wherein the insulating fluid (130) is configured to dissipate heat from multi-cell battery components.

7. The multi-cell battery pack of claim 6, wherein the multi-cell battery components comprise at least one of battery cells (115;215-218), bus bars (120) and electrical leads.

8. The multi-cell battery pack of any preceding claim, wherein the insulating fluid (130) comprises a boiling point between about -80°F and about 2700°F (about -62.22°C and about 1482°C).

9. The multi-cell battery pack of any preceding claim, wherein the insulating fluid (130) is a fluorocarbon.

10. A method comprising:
raising the temperature of a cell (115;215-218) within a liquid tight pressure vessel (110) of a multi-cell battery pack (100);
expanding insulating fluid (130) in thermal contact with the cell (115;215-218) of the multi-cell battery pack (100) in response to the raising, wherein the insulating fluid (130) becomes less dense and increases in buoyancy as it is heated;
passively moving the heated expanded insulating fluid (130) away from the cell (115;215-218) within the multi-cell battery pack (100) towards a condenser (240) by way of convection;
passively replacing the heated expanded insulating fluid (130) with relatively cooler insulating fluid (130) in thermal contact with the cell (115;215-218) of the multi-cell battery pack (100) via gravity; and
dissipating heat from the heated expanded insulating fluid (130).

11. The method of claim 10, further comprising causing the insulating fluid (130) in thermal contact with the cell (115;215-218) of the multi-cell battery pack (100) to boil.

12. The method of claim 10 or 11, further comprising removing heat and distributing the heat over a large surface area of the multi-cell battery pack (100).

13. The method of any of claims 10 to 12, wherein the insulating fluid (130) is a fluorocarbon.

14. The method of any of claims 10 to 13, wherein the insulating fluid (130) is configured to deprive the multi-cell battery pack (100) of oxygen for combustion.

15. The method of any of claims 10 to 14, wherein the liquid tight pressure vessel (110) comprises a thermosiphon.
